# DEMANDE DE BREVET EUROPEEN

(11) **EP 1 289 294 A1**
(43) Date de publication de la demande: **05.03.2003**
(21) Numéro de dépôt: 01402179.4
(22) Date de dépôt: 16.08.2001
(51) Int. Cl.: H04N 7/10

(54) **Système de transmission interactive d'un guide web multimédia, et procédé mis en oeuvre dans un tel système**

(71) Demandeur: Citeservice, 75016 Paris (FR)
(72) Inventeur: Bascoulergue, André, 75013 Paris (FR); Coquin, Ronan, 63520 Saint Jean des Ollieres (FR)
(74) Mandataire: Pontet, Bernard

(57) **Abrégé**

L'invention concerne un système de transmission interactive d'un guide multimédia vers une pluralité de téléviseurs (17) d'un hôtel à partir d'un serveur local (3) dans lequel est stocké le guide multimédia. Le système comprend pour chaque téléviseur un micro ordinateur (7, 8, 9) doté d'une carte vidéo équipée d'une sortie TV. Cette sortie TV est modulée sur un canal TV différent pour chaque chambre (2) de l'hôtel et ajoutée aux autres canaux TV existant les signaux de commandes émis depuis la chambre par un utilisateur sont transmis au serveur local par courant porteur (22,23), et réciproquement. A la réception, proche de chaque téléviseur, un tuner-démodulateur (16), relié au câble TV, récupère le signal vidéo pour le téléviseur correspondant et alimente ce téléviseur par une prise péritel.

## Description

La présente invention est relative à un système et un procédé de transmission interactive d'un guide Web multimédia. Elle trouve une application particulièrement intéressante dans la distribution de guide Web multimédia sur des téléviseurs d'un hôtel ou d'un hôpital. Toutefois, l'invention est d'un cadre plus large car elle peut être appliquée à tout système multi-utilisateurs de transmission de données.

Dans l'état de la technique antérieur, le document WO0072175 concerne un système de connexion à Internet et de distribution de films vidéo. Une chambre d'hôtel par exemple est équipée d'un téléviseur et d'une unité de contrôle commandée par clavier et/ou télécommande infrarouge. Plusieurs unités de contrôle sont connectées à un concentrateur lui-même relié à un routeur. Ce routeur peut se connecter à Internet, à un serveur de films vidéo, à un module de gestion de l'hôtel, et à un module d'allocation de canaux radiofréquences vers le téléviseur. Lorsqu'un client désire se connecter à Internet, on lui attribue un canal. La voie ascendante (clavier vers Internet) se fait via un réseau Ethernet, et la voie descendante se fait via le module d'allocation de canaux radiofréquences qui transmet les pages Web sur un canal prédéterminé vers le téléviseur demandeur. Ce téléviseur bascule alors sur ce canal prédéterminé de façon manuelle ou par une commande envoyée par l'unité de contrôle.

On connaît également le document WO9824229 décrivant un système de connexion à Internet dans un hôtel. Le réseau local Ethernet comprend un serveur de l'hôtel relié à plusieurs unités de traitements. Chaque unité de traitement peut être allouée à un utilisateur désirant se connecter à Internet. Cette allocation est déterminée par un contrôleur-multiplexeur relié à chaque téléviseur via une unité d'interface et un modem. Le modem et l'unité d'interface permettent d'adapter le signal provenant de l'Internet pour qu'il soit accepté par le téléviseur. L'unité d'interface interprète également des commandes provenant d'un clavier infrarouge.

Un but de la présente invention est de proposer un système de distribution de données multimédia de façon interactive et rapide.

L'invention a encore pour but l'optimisation de l'intégration d'un tel système dans un établissement.

On atteint les buts précités avec un système de transmission interactive de données multimédia vers une pluralité de téléviseurs à partir d'un serveur local dans lequel sont stockées les données multimédia. Les données multimédia sont par exemple un guide multimédia destiné aux occupants d'un hôtel.

Le système selon l'invention comprend, pour chaque téléviseur, des moyens pour convertir les données multimédia numériques provenant du serveur local en signal vidéo. Avantageusement, ces moyens de conversion peuvent comprendre une carte de conversion de signal numérique en signal vidéo disposée dans un outil informatique, tel qu'un micro ordinateur. De préférence pour chaque téléviseur, on installe, au sein de l'outil informatique par exemple, un modulateur radiofréquence pour moduler ce signal vidéo à une fréquence distincte des fréquences des signaux vidéos des chaînes TV conventionnelles. On peut prévoir des moyens de cryptage disposés par exemple dans l'outil informatique et permettant de crypter chaque signal vidéo avant modulation.

A chaque téléviseur est allouée une fréquence de transmission donnée. Cette allocation pouvant être réalisée de façon dynamique ou fixe. L'outil informatique peut comprendre en outre des moyens de traitement tel qu'un microprocesseur ou un microcontrôleur capable de modifier de façon dynamique la fréquence de modulation. Ce microprocesseur ou microcontrôleur peut notamment obéir à des consignes provenant du serveur local via une liaison série.

Ces signaux vidéo modulés et éventuellement cryptés sont ensuite transmis vers la pluralité des téléviseurs via un câble TV, lequel câble véhicule également les chaînes de télévision conventionnelles. En d'autres termes, on mélange au moyen d'un sommateur les signaux vidéo provenant des modulateurs radiofréquence avec les signaux vidéo des chaînes TV conventionnelles.

En allouant à chaque téléviseur une fréquence prédéterminée, les chaînes hertziennes ou satellites de la télévision ne sont pas dégradées de façon visible par le système.

Selon l'invention, le système comprend en outre, pour chaque téléviseur, des moyens de démodulation pour récupérer le signal vidéo modulé transmis via le câble TV et alimenter le téléviseur correspondant. De préférence, ces moyens de démodulation comprennent un tuner-démodulateur fonctionnant à une fréquence identique à la fréquence de modulation allouée pour le téléviseur correspondant. Si l'allocation est fixe, alors la fréquence de démodulation est fixée par avance; si l'allocation est dynamique, alors la fréquence de démodulation peut également être modifié dynamiquement par le serveur local par une liaison à courant porteur comme décrit plus en détails dans la suite. Ainsi, ce tuner-modulateur sélectionne parmi l'ensemble des signaux vidéo transitant par le câble TV, celle destinée au téléviseur auquel il est connecté, notamment au moyen d'une prise péritel.

Le fait d'utiliser un tuner différent de celui du téléviseur, permet de rendre ce tuner contrôlable par l'utilisateur et par un superviseur de l'établissement, par exemple l'hôtelier.

Selon une caractéristique avantageuse de l'invention, le système comprend pour chaque téléviseur, une liaison bidirectionnelle par courant porteur entre un boîtier serveur relié au serveur local et un boîtier client localisé proche de chaque téléviseur. En d'autres termes, le système comprend un boîtier émetteur-récepteur maître relié au serveur local et un boîtier émetteur-récepteur esclave dans chaque chambre de l'hôtel. Ce type de liaison peut être réalisée avec une transmission de données à haut ou faible débit.

Le boîtier client est apte à recevoir des consignes provenant de l'utilisateur, ces consignes pouvant être transmises au moyen d'un appareil distant tel un clavier infrarouge ou une télécommande infrarouge.

Pour chaque téléviseur, le boîtier client peut comprendre des moyens pour gérer les moyens de démodulation en réponse à une consigne provenant du serveur local via la liaison courant porteur ou provenant de l'utilisateur du téléviseur correspondant.

Ces moyens de démodulation peuvent avantageusement être intégrés dans le boîtier client. On a donc dans chaque chambre un boîtier client qui réceptionne les images et le son du guide multimédia via le câble coaxial TV unidirectionnel, et communique avec le serveur local via le réseau courant porteur bidirectionnel.

Selon un mode de mise en oeuvre de l'invention, le système est intégré dans un établissement dont plusieurs pièces comprennent chacune au moins un téléviseur et un boîtier client. Par ailleurs, le serveur local et l'outil informatique (le micro-ordinateur) peuvent constituer un réseau local de type Ethernet localisé dans une pièce privée de l'établissement. Une telle disposition permet une transmission rapide et fluide des pages constituant le guide Web multimédia puisque le serveur des pages du guide est localisé au sein de l'établissement et la transmission se fait via un réseau local haut débit et le câble TV en radiofréquence.

On peut également relier à ce réseau local des moyens informatiques de gestion du serveur local, ces moyens étant aptes à commander la transmission des pages du guide multimédia sur un téléviseur donné. A titre d'exemple, ces moyens informatiques peuvent être un micro ordinateur et une imprimante. Un hôtelier peut lancer l'impression de certaines informations du guide demandées par un client depuis sa chambre. De plus, l'invention est remarquable par le fait que l'hôtelier peut permettre la transmission du guide multimédia sur le téléviseur d'une chambre lors de l'arrivée d'un client. Pour ce faire, il envoie une consigne pour activer le tuner-démodulateur disposé dans le boîtier client. Cette consigne part de l'ordinateur de l'hôtelier jusqu'au boîtier client en passant par le serveur local et le réseau courant porteur. L'activation du tuner-démodulateur injecte un signal dans la prise péritel, ce qui a pour conséquence de réveiller le téléviseur ou de le faire basculer sur le guide Web multimédia.

Avantageusement, le système comprend en outre un modem reliant le serveur local à un réseau de communication de type Internet et donnant accès aux utilisateurs des téléviseurs à la messagerie électronique. Les clients d'un hôtel peuvent alors envoyer et recevoir des mails sur Internet sur une adresse temporaire allouée par l'hôtel ou sur une boîte électronique personnelle du client.

En complément notamment de ce qui précède, le système comprend un serveur central externe relié au serveur local via un réseau de communication de type Internet et destiné à mettre à jour, notamment régulièrement, les données multimédia.

Avec un tel système, l'hôtelier peut saisir des informations sur la gestion du compte client, ces données étant ensuite relevées à distance par le serveur central pour des statistiques. Certaines informations peuvent être utilisées pour une personnalisation du guide. Par exemple, l'hôtelier peut saisir la langue et la nationalité du client, ce qui permet d'afficher le guide dans la langue choisie et facilite la prise de contact.

La fréquentation des publicités et services peut être relevée de façon anonyme régulièrement à distance par le serveur central.

Pour l'intégration du système selon l'invention dans un établissement, la liaison descendante via le câble TV et la liaison bidirectionnelle par courant porteur via le circuit électrique présentent l'avantage d'utiliser des éléments pré-existants. On minimise ainsi le coût de la mise en place du système qui se fait de manière simple en connectant des modules sur des câbles (TV et électrique) pré-existants.

Un étage de commutation peut être ajouté entre la liaison bidirectionnelle par courant porteur et, les outils informatiques respectivement dédiés aux téléviseurs, donc à leurs utilisateurs. Cela permet de multiplexer les signaux issus d'un appareil distant, télécommande et/ou clavier, en fonction de leurs adresses, pour communiquer avec l'outil informatique correspondant, comme si il y était directement relié, par exemple au travers d'entrées souris/clavier de type PS2.

L'ajout d'un étage de commutation permet un fonctionnement autonome des micro-ordinateurs, c'est à dire que des applications diverses peuvent être réalisées entre plusieurs utilisateurs, par exemple des jeux en réseaux ou des échanges de messages en évitant d'utiliser le serveur local si ce n'est pas nécessaire. Ainsi, le débit pour ces applications est amélioré, et le serveur local est soulagé de certaines tâches.

Suivant un autre aspect de l'invention, il est proposé un procédé de transmission interactive de données multimédia vers une pluralité de téléviseurs d'un établissement à partir du serveur local dans lequel sont stockées ces données multimédia. Selon l'invention, on convertit les données multimédia numériques en signaux vidéo locaux, on module ces signaux vidéo locaux en des fréquences distinctes des fréquences des signaux vidéo des chaînes TV conventionnelles, on transmet les signaux vidéo locaux vers les téléviseurs via le câble de transmission des signaux vidéo conventionnels, et dans chaque pièce équipée d'un téléviseur on démodule un signal vidéo local destiné à ce téléviseur.

D'autres avantages et caractéristiques de l'invention apparaîtront à l'examen de la description détaillée d'un mode de mise en oeuvre nullement limitatif, et les dessins annexés sur lesquels :
- la figure 1 est une vue schématique de la structure du système selon l'invention;
- La figure 2 est un schéma de principe d'un coffret renfermant des cartes mères intégrées et des moyens de conversion et modulation selon l'invention;
- La figure 3 est un schéma de principe d'une carte de conversion-démodulateur illustré sur la figure 2;
- La figure 4 est un schéma illustrant un convertisseur selon l'invention;
- La figure 5 est un schéma illustrant un modulateur dans la gamme UHF et VHF selon l'invention; et
- La figure 6 est un schéma de principe d'un boîtier client alimentant un téléviseur par prise péritel et réalisant une fonction d'émetteur-récepteur pour un réseau par courant porteur selon l'invention.
- La figure 7 est une vue schématique et partielle d'un système tel que représenté à la figure 1 auquel a été ajouté un étage de commutation.

Bien que l'invention n'y soit pas limitée, on va maintenant décrire le système selon l'invention appliqué à un hôtel équipé de plusieurs téléviseurs. Cet hôtel comprend une salle de réception 1 désignée par la suite la réception, et au moins une chambre 2 équipée d'un téléviseur 17. La réception 1 comprend un serveur local 3 logeant un guide multimédia interactif. Ce guide peut être sous forme de pages contenant des éléments vidéo et/ou sonores. Ces pages sont liées entre elles par des liens hypertextes permettant la navigation dans l'ensemble du guide. Ce serveur 3 est un micro-ordinateur PC équipé de moyens nécessaires pour constituer avec d'autres éléments un réseau local Ethernet symbolisé par un concentrateur 4 ou Hub en langue anglaise. Font également partie du réseau Ethernet, un ordinateur portable 5 piloté par l'hôtelier responsable de la réception et plusieurs autres micro-ordinateurs 7, 8 et 9. Chaque micro-ordinateur 7, 8 ou 9 est prévu pour un téléviseur donné et possède plusieurs fonctions :
- une fonction vidéo capable de transformer des données numériques en signal s-vhs ou vidéo composite affichable par une TV.
- une fonction génération de son capable de lire plusieurs formats de son, et
- une fonction microprocesseur capable :
- d'interpréter les pages Web (HTML,etc,..) envoyées par le serveur grâce a un interpréteur, navigateur Web par exemple,
- de rediriger vers le navigateur WEB les codes ASCII transmis par le serveur comme s'ils étaient issus de l'entrée clavier du micro ordinateur.

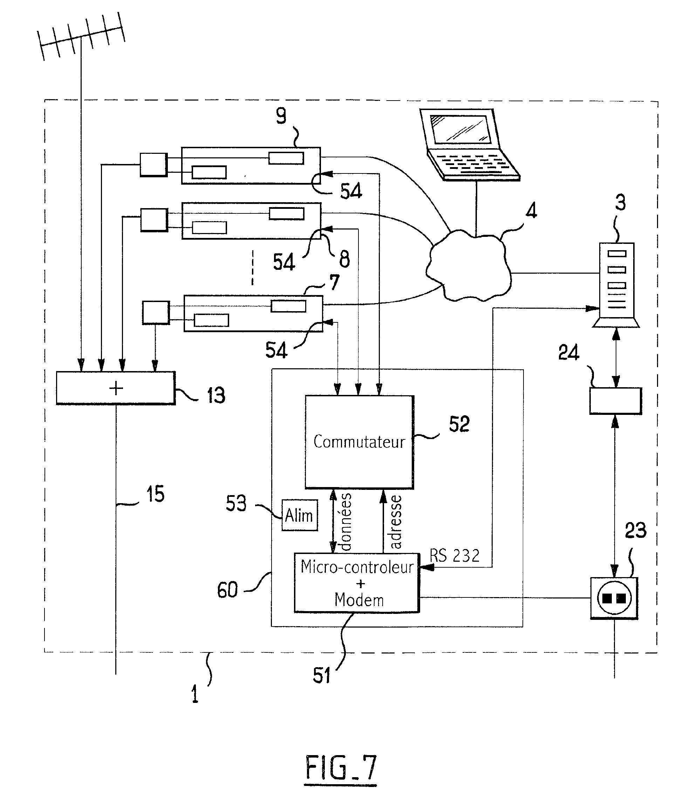

Si le système comprend un étage de commutation 60, tel que représenté à la figure 7, la fonction micro processeur est aussi capable de rediriger vers le navigateur Web, les codes ASCII transmis au travers des entrées souris/clavier (54) de type PS2, comme si le clavier de l'utilisateur y était directement relié.

Chaque micro-ordinateur 7, 8 ou 9 comprend une carte vidéo 27, 28 ou 29 capable de transformer un signal VGA numérique destiné aux écrans d'ordinateur en un signal vidéo analogique de type SVHS capable d'être prise en charge par un téléviseur, et comprend également une carte son 30, 31 ou 32.

Des modulateurs radiofréquences 10, 11 et 12 sont respectivement connectés aux micro-ordinateurs 7, 8 et 9. Leur rôle est de transmettre vers un sommateur 13 les signaux vidéo SVHS selon une porteuse UHF (ultra high frequency). Pour un gain de place, on intègre dans un coffret huit appareils possédant chacun l'ensemble des fonctions énumérées ci-dessus. Chaque appareil peut par exemple être sous forme d'une carte intégrée multifonctions (vidéo, son, réseau, micro processeur).

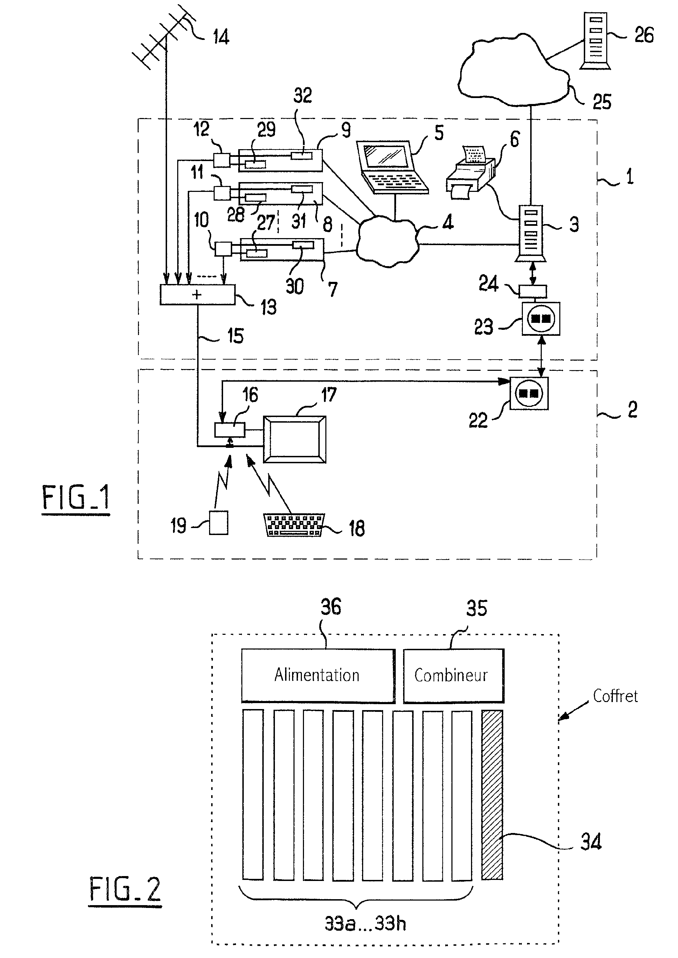

Chaque coffret, conformément à la figure 2 est doté de huit cartes mères PC intégrées 33a à 33h, d'une carte spécifique 34 pour les fonctions de conversion et de modulation, d'une carte 35 pour combiner les signaux issus de la modulation et d'une alimentation 36.

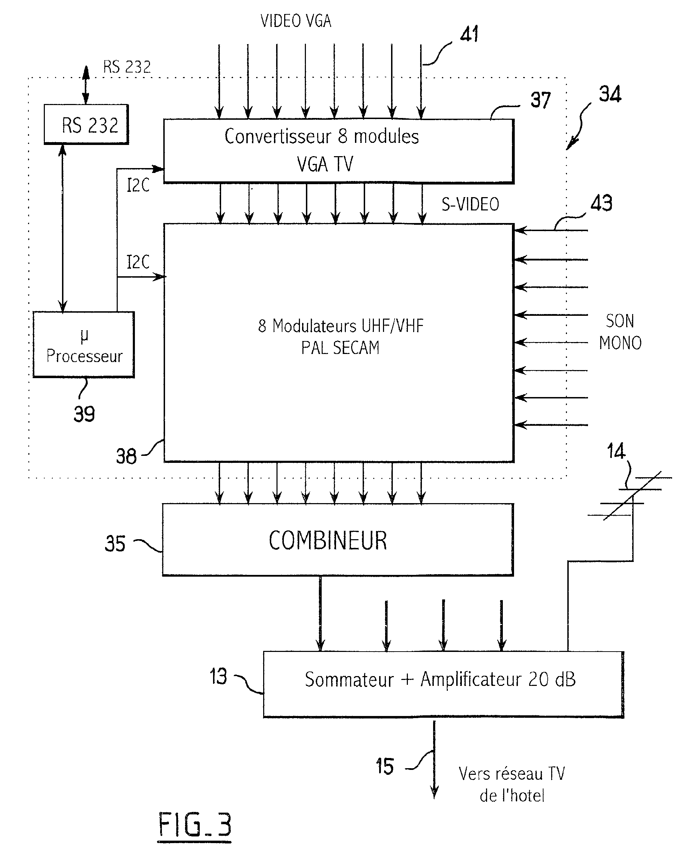

Sur la figure 3 est représentée plus en détail la carte spécifique 34 qui comprend un groupe 37 de huit modules de conversion recevant huit signaux 41 issus de huit connecteurs VGA des cartes vidéo intégrées dans les huit cartes mères 33a à 33h. Il comprend également un groupe de huit modules de modulation 38 alimentés par les signaux issus des modules de conversion 37 et par des signaux sonores 43. Ces signaux sonores proviennent des huit cartes mères. Il comprend aussi un microprocesseur 39 gérant les deux groupes de modules 37 et 38 par un bus de type I2C 40 (Inter Integrated Circuit en langue anglaise). Les fonctions de ce microprocesseur sont les suivantes :
- programmation du mode de codage PAL ou SECAM ainsi que du mode d'affichage utilisé sur les 8 modules de conversion;
- programmation de la fréquence de modulation correspondant au canal UHF ou VHF choisi (éventuellement une fréquence entre 2 canaux ) ainsi que du codage utilisé PAL B/G ou SECAM L pour les 8 modules de démodulation;
- génération d'une mire et d'une fréquence sonore de vérification sur la fréquence sélectionnée pour les 8 modules de démodulation; et
- configurable (par une table de configuration pour les 16 modules par exemple) par un ordinateur distant via la liaison RS232.

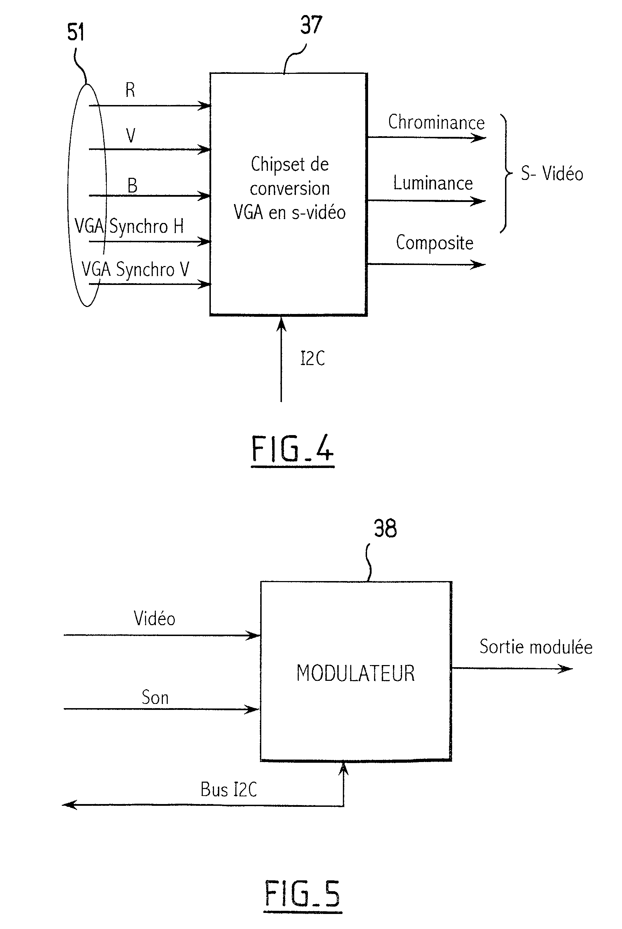

Sur la figure 4 on voit un module de conversion VGA-Svidéo 37. En entrée, il reçoit un signal VGA, d'une définition de 640*480 en 16 millions de couleurs et un rafraîchissement de 60 à 75 KHz. En sortie on obtient un signal au format s-vidéo et un signal au format vidéo composite, ces signaux étant compatibles PAL ou SECAM.

Sur la figure 5 on voit un modulateur 38 ayant en entrée les signaux sonores et vidéo, s-vidéo ou vidéo composite. A la sortie on obtient un signal modulé dans la gamme UHF ou VHF et on peut choisir le standard de sortie : PAL B/G ou SECAM L par exemple.

On voit également sur la figure 3 que les signaux de sortie des modulateurs 38 alimentent le combineur 35. Ce combineur 35 génère un signal destiné à être sommé avec des signaux provenant des combineurs liés à d'autres coffrets et avec les signaux TV des chaînes hertziennes conventionnelles. Le sommateur 13 transmet donc l'ensemble de ces signaux dans le câble coaxial 15 vers l'ensemble des chambres, notamment la chambre 2.

Par ailleurs, pour des raisons de confidentialité (mail ou autre) on peut coder ou crypter simplement avec un composant faible coût le signal vidéo juste avant de le moduler. Il sera décrypté seulement par un démodulateur dans la chambre correspondante.

La chambre 2 est donc équipée du téléviseur 17 relié au câble TV 15 par lequel transitent les émissions de télévision. Un boîtier 16 comprenant un tuner-démodulateur capte le signal sommé transitant via le câble TV 15, isole le signal vidéo haute fréquence correspondant au téléviseur 17, démodule ce signal vidéo haute fréquence et alimente le téléviseur 17 via une prise péritel.

Le système comprend en outre une liaison courant porteur via les prises électriques 22 et 23 respectivement disposées dans la chambre 2 et dans la réception 1. Le boîtier client 16 intègre également les moyens de réception des signaux infrarouge provenant du clavier 18 et de la télécommande 19 ainsi que des moyens de traitement de ces signaux infrarouge pour une transmission via les prises de courant. Chaque chambre de l'hôtel comprend un boîtier client 16 intégrant un émetteur-récepteur esclave alors que la réception comprend un boîtier serveur maître 24 pour traiter les signaux électriques sortant de la prise 23 et transmettre des données vers le serveur local 3.

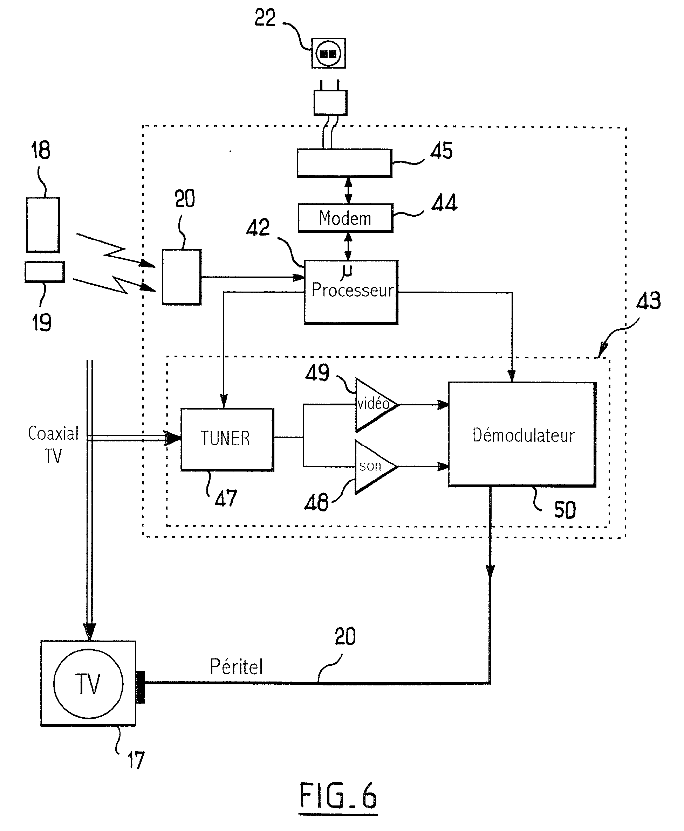

Sur la figure 6, on voit plus en détail les éléments internes du boîtier client 16. Ce boîtier est animé par un microprocesseur 42 qui gère le paramétrage du tuner-démodulateur 43, les consignes sous forme infrarouge provenant de l'utilisateur et la communication bidirectionnelle avec le serveur local 3. Les consignes de l'utilisateur sous forme de données infrarouge sont réceptionnées par le capteur 20 relié au microprocesseur 42. Les données IR sont décodées et transformées en code ASCII binaire. Ce code est ensuite encapsulé dans un message comprenant entête, adresse de l'émetteur, cheksum... et permettant d'être conforme à un protocole de communication sur courant porteur développé spécifiquement pour le système ou un protocole de type LonTalk. Avant d'être injecté dans le réseau électrique, ce message passe par un modem 44 et un circuit de couplage au réseau de puissance 45. Lorsque le code et l'adresse de l'émetteur arrivent sur le boîtier serveur maître 24, ils sont transmis au serveur local via une liaison RS232.

Dans la configuration représentée à la figure 7, le code et l'adresse sont aussi transmis de la même façon à l'étage de commutation 60 via une liaison RS 232.

Le tuner-démodulateur 43 est composé d'un tuner 47 permettant de régler le canal que l'on veut utiliser, de deux filtres 48 et 49 pour isoler le signal vidéo et le signal sonore, et d'un démodulateur 50 apte à activer une sortie S-VHS sur commande du processeur 42. Le tuner 47 est programmable par le microprocesseur 42 via un bus I2C et permet de générer un signal modulé à une fréquence fixe quelle que soit la fréquence du canal en entrée. Avec un tel boîtier client, il est possible de commander le réveil ou la mise en veille (ou retour sur d'autres chaînes) du téléviseur au moyen de la télécommande 19 (ou clavier 18) via le bus I2C du processeur 42. Le réveil ou la mise en veille est obtenu en commandant la mise en marche ou l'arrêt du démodulateur 50. De la même manière la commande peut provenir de l'hôtelier, via son ordinateur 5, le serveur 3, le réseau électrique de courant porteur et le bus I2C du microprocesseur 42. On peut également agir sur le niveau du son par les mêmes chemins. L'utilisateur peut également régler de façon fine le tuner au moyen du clavier ou de la télécommande infrarouge.

Le serveur 3 peut gérer de façon dynamique la fréquence de fonctionnement du tuner 47.

Lorsqu'un client pénètre dans la chambre 2, l'hôtelier peut enclencher le réveil du téléviseur de la manière suivante :
- validation de la mise en marche du système dans la chambre 2 par l'hôtelier sur son ordinateur 5;
- transmission de cette information de validation vers le serveur local 3 via le réseau Ethernet 4;
- transmission de l'information du serveur local 3 vers l'émetteur-récepteur maître 24 via la liaison RS232;
- transmission vers le boîtier client 16 de la chambre 2 via le réseau courant porteur;
- dans le boîtier 16, transmission de l'information vers le démodulateur 50 via le microprocesseur 42 (ou microcontrôleur) et le bus I2C;

Ce démodulateur a alors la permission d'envoyer le signal démodulé vers la prise péritel 21, ce qui a pour effet de basculer la télévision auparavant en veille (ou sur une autre chaîne) sur l'entrée péritel et ainsi d'afficher la page de démarrage du guide Web multimédia.

Pour naviguer à travers le guide multimédia, c'est-à-dire faire afficher d'autres pages ou des séquences vidéos et/ou sonores par exemple, le client utilise par exemple le clavier 18. Une commande, sous forme infrarouge, d'affichage d'une nouvelle page émise par le clavier 18 est réceptionnée par le boîtier 16 qui le transmet vers le serveur local 3 à travers le réseau électrique 22, 23. A la réception de la commande, le serveur 3 transmet la nouvelle page demandée par le client.

Le clavier et/ou la télécommande permettent au client de naviguer dans le guide multimédia et de consulter, éditer et envoyer des messages électroniques.

On va décrire maintenant la figure 7 seulement en ce qu'elle diffère de la figure 1. Seule la réception 1 y est représentée.

Un étage de commutation 60 a été ajouté au système entre la liaison par courant porteur, par exemple la prise 23 et des entrées souris/clavier 54 des micro-ordinateurs 7, 8, 9 dédiés aux téléviseurs. Cet étage de commutation comprend un boîtier courant porteur/serveur 51 incluant un micro-contrôleur et un Modem, un commutateur 52 et une alimentation 53. Le commutateur est relié aux entrées souris/clavier de chacun des micro-ordinateurs, le commutateur 52 et le boîtier 51 échangent des données, et le boîtier transmet, en même temps que des données, l'adresse des opérateurs émettant ces données depuis leur clavier.

Ainsi, l'étage de commutation permet de mettre en réseau les micro-ordinateurs en multiplexant leurs entrées 54 sans utiliser le serveur local 3. Chaque utilisateur peut donc utiliser le micro-ordinateur qui lui est dédié comme si son clavier y était directement relié et communiquer avec au moins un autre utilisateur lorsqu'il n'est pas utile d'utiliser les fonctions du serveur local 3.

Le système permet au client de contacter directement l'hôtelier ou encore de lancer des impressions sur une imprimante 6 reliée au serveur local 3. Cette impression peut être supervisée par l'hôtelier au moyen de l'ordinateur portable 5.

Le client peut également se connecter à Internet pour bénéficier de la messagerie électronique puisque le système selon l'invention prévoit une connexion au réseau Internet 25 au moyen d'un modem de type ADSL (non représenté) connecté au PC du serveur local par une liaison RS232. Cette connexion à Internet est supervisée par l'hôtelier.

Un serveur central 26, externe à l'hôtel, est prévu pour mettre régulièrement à jour le contenu des informations publicitaires et évènementielles du guide multimédia, relever régulièrement la fréquentation des informations multimédia pour les statistiques, et effectuer de la maintenance logicielle et le diagnostique "hardware" en cas de défaillances.

La mise en place de réseaux à haut débit et la proximité des éléments, selon l'invention, permettent une transmission fluide du multimédia qui est ainsi facilement lisible sur écran TV de 36cm à 3m.

Avantageusement, le système peut s'installer sans câblage important et sur les téléviseurs existants.

L'intérêt d'utiliser un tuner-démodulateur spécifique (et non celui du téléviseur) est :
- de pouvoir avoir accès a la prise péritel permettant de réveiller le téléviseur lorsque ce dernier était en veille; et
- de pouvoir commander la mise en marche et l'arrêt de l'affichage du guide au moyen de la télécommande.

Pour pouvoir faire fonctionner en même temps toutes les chambres de l'hôtel, on utilise un réseau courant porteur faible débit et une porteuse sur laquelle est calée l'émetteur-récepteur maître. Pour augmenter le nombre de chambres desservies, on peut prévoir une seconde porteuse et un second émetteur-récepteur maître calé sur cette seconde porteuse, les émetteurs-récepteurs esclaves associés devant aussi être calés sur cette seconde porteuse. La discrimination se fait par analyse de la porteuse. On peut aussi utiliser un réseau courant porteur haut débit pour augmenter sensiblement le nombre de chambres desservies avec ou sans ajout de nouvelle porteuse.

Bien sûr, l'invention n'est pas limitée aux exemples qui viennent d'être décrits et de nombreux aménagements peuvent être apportés à ces exemples sans sortir du cadre de l'invention.

Par exemple, au lieu d'utiliser une entrée source/clavier de type PS2, un commutateur peut utiliser une entrée de type USB.

## Revendications

1. Système de transmission interactive de données multimédia vers une pluralité de téléviseurs (17) à partir d'un serveur local (3) dans lequel sont stockées lesdites données multimédia, comprenant pour chaque téléviseur des moyens de conversion (7, 8, 9) des données multimédia numériques provenant du serveur local en signal vidéo, **caractérisé en ce qu'**il comprend en outre pour chaque téléviseur, des moyens de modulation (10, 11, 12) dudit signal vidéo et des moyens de démodulation (50) pour récupérer ce signal vidéo transmis via un câble TV (15)et alimenter le téléviseur correspondant.

2. Système selon la revendication 1, **caractérisé en ce qu'**il comprend en outre pour chaque téléviseur, une liaison bidirectionnelle par courant porteur (22, 23) entre un boîtier serveur (24) relié au serveur local (3) et un boîtier client (16) localisé proche de chaque téléviseur.

3. Système selon la revendication 2, **caractérisé en ce que** le boîtier client est apte à recevoir des consignes provenant de l'utilisateur.

4. Système selon l'une des revendications 2 ou 3, **caractérisé en ce que** les consignes provenant de l'utilisateur sont transmises au moyen d'un appareil distant (18, 19).

5. Système selon l'une quelconque des revendications 2 à 4, **caractérisé en ce que** ledit appareil distant est un clavier infrarouge (18) ou une télécommande infrarouge (19).

6. Système selon l'une quelconque des revendications 2 à 5, **caractérisé en ce que** pour chaque téléviseur, le boîtier client comprend des moyens pour gérer (42) lesdits moyens de démodulation en réponse à une consigne provenant du serveur local via la liaison courant porteur.

7. Système selon l'une quelconque des revendications 2 à 6, **caractérisé en ce que** pour chaque téléviseur, le boîtier client comprend des moyens pour gérer (42) lesdits moyens de démodulation en réponse à une consigne provenant de l'utilisateur du téléviseur correspondant.

8. Système selon l'une quelconque des revendications 2 à 7, **caractérisé en ce que** pour chaque téléviseur, lesdits moyens de démodulation sont intégrés dans le boîtier client.

9. système selon l'une quelconque des revendications précédentes, **caractérisé en ce que** pour chaque téléviseur, les moyens de conversion comprennent une carte (37) de conversion de signal numérique en signal vidéo, et les moyens de modulations comprennent un modulateur radiofréquence (38) pour moduler ce signal vidéo à une fréquence distincte des fréquences des signaux vidéos des chaînes TV conventionnelles, et **en ce que** cette carte de conversion et ce modulateur sont disposés dans un outil informatique (34).

10. Système selon la revendication 9, **caractérisé en ce qu'**il comprend des moyens pour crypter chaque signal vidéo avant modulation.

11. Système selon l'une des revendications 9 et 10, **caractérisé en ce que** l'outil informatique (34) comprend des moyens de traitement (39) capable de modifier de façon dynamique ladite fréquence de modulation.

12. Système selon l'une quelconque des revendications précédentes, **caractérisé en ce qu'**il comprend en outre un sommateur (13) pour sommer les signaux vidéo provenant des moyens de modulation avec des signaux vidéo de chaînes TV conventionnelles et pour transmettre le signal ainsi sommé vers la pluralité des téléviseurs.

13. Système selon l'une quelconque des revendications précédentes, **caractérisé en ce que** les moyens de démodulation comprennent un tuner-démodulateur (43).

14. Système selon l'une quelconque des revendications précédentes, **caractérisé en ce qu'**il comprend en outre un modem reliant le serveur local (3) à un réseau de communication (25) de type Internet et donnant accès aux utilisateurs des téléviseurs à la messagerie électronique

15. Système selon l'une quelconque des revendications précédentes, **caractérisé en ce qu'**il comprend en outre un serveur central externe (26) relié au serveur local (3) via un réseau de communication (25) de type Internet et destiné à mettre à jour lesdites données multimédia.

16. Système selon l'une quelconque des revendications 9 à 15, **caractérisé en ce qu'**il est intégré dans un établissement dont plusieurs pièces (2) comprennent chacune au moins un téléviseur et un boîtier client, et **en ce que** le serveur local et l'outil informatique constituent un réseau local de type Ethernet (4) localisé dans une pièce privée (1) dudit établissement.

17. Système selon la revendication 16, **caractérisé en ce que** des moyens informatiques (5) de gestion du serveur local sont reliés au réseau local, ces moyens étant aptes à activer les moyens de démodulation.

18. Système selon la revendication 17, **caractérisé en ce que** les moyens informatiques (5) comprennent un micro ordinateur relié à une imprimante (6).

19. Système selon l'une quelconque des revendications précédentes, **caractérisé en ce que** pour chaque téléviseur, il comprend une prise péritel (20) reliant les moyens de démodulations (50) au téléviseur correspondant.

20. Système selon l'une des revendications 10 à 19, **caractérisé en ce qu'**il comprend un étage de commutation (60) entre la liaison par courant porteur (23) et des entrées (54) pour les outils informatiques (7, 8, 9) des téléviseurs.

21. Procédé de transmission interactive de données multimédia vers une pluralité de téléviseurs d'un établissement à partir d'un serveur local dans lequel sont stockées lesdites données multimédia, dans lequel on convertit les données multimédia numériques en signaux vidéo locaux, **caractérisé en ce qu'**on module ces signaux vidéo locaux en des fréquences distinctes des fréquences des signaux vidéo des chaînes TV conventionnelles, on transmet les signaux vidéo locaux vers les téléviseurs via le câble de transmission des signaux vidéo conventionnels, dans chaque pièce équipée d'un téléviseur on démodule un signal vidéo local destiné à ce téléviseur.

22. Procédé selon la revendication 21, **caractérisé en ce qu'**on assure l'interactivité avec les données multimédia à l'aide d'une voie de retour utilisant un réseau par courant porteur.

23. Procédé selon la revendication 22, **caractérisé en ce que** le réseau par courant porteur étant bidirectionnelle, on contrôle à distance la mise en marche et le paramétrage des moyens de démodulation à partir du serveur local via ce réseau par courant porteur.

24. Procédé selon l'une quelconque des revendications 21 à 23, **caractérisé en ce que** l'utilisateur d'un téléviseur contrôle la mise en marche du guide multimédia en envoyant des consignes vers les moyens de démodulation.

25. Procédé selon l'une quelconque des revendications 21 à 24, **caractérisé en ce qu'**on connecte le serveur local à un réseau de communication de type Internet pour permettre aux utilisateurs l'accès à la messagerie électronique.

26. Procédé selon la revendication 25, **caractérisé en ce que** la consultation de la messagerie électronique se fait au moyen d'un clavier sans fil et par voie de courant porteur.

27. Procédé selon l'une quelconque des revendications 21 à 26, **caractérisé en ce qu'**on met à jour le serveur local à partir d'un serveur central externe via un réseau de communication de type Internet.

28. Procédé selon l'une quelconque des revendications 21 à 27, **caractérisé en ce qu'**on module en même temps que les signaux vidéo, les signaux sonores correspondant à ses signaux vidéo.

29. Procédé selon l'une quelconque des revendications 21 à 28, **caractérisé en ce qu'**on crypte les signaux vidéo avant modulation et on décrypte après démodulation.
